# EUROPEAN PATENT SPECIFICATION

(11) **EP 2 214 474 B1**
(45) Date of publication and mention of the grant of the patent: **24.08.2011**
(21) Application number: 08829950.8
(22) Date of filing: 26.11.2008
(51) Int. Cl.: A01K 11/00, H01Q 1/27, H01Q 1/22

(54) **ALUMINUM ANTENNA COIL**
ALUMINIUMANTENNENSPULE
BOBINE D'ANTENNE EN ALUMINIUM

(30) Priority: 27.11.2007 NL 2001033
(43) Date of publication of application: 11.08.2010
(73) Proprietor: N.V. Nederlandsche Apparatenfabriek NEDAP, 7141 DC Groenlo (NL)
(72) Inventor: ROOSENBOOM, Derk Jan, NL-7481 EK Haaksbergen (NL); ZENTS, Otto Theodorus Jozef, NL-7131 ES Lichtenvoorde (NL); SCHÄPERCLAUS, Edwin, NL-7161 HH Neede (NL); STEKELENBURG, Jan Cornelis, NL-7101 CJ Winterswijk (NL)
(74) Representative: Hatzmann, Martin
(86) International application number: PCT/NL2008/050753
(87) International publication number: WO 2009/070021

(56) References cited:
- WO-A-99/45760
- WO-A-2007/041675
- US-A1- 2001 011 012

## Description

The invention relates to an ear stud for identifying an animal, provided with a housing and a transponder included in the housing which is designed for transmitting an identification code upon introduction of the ear stud into an electromagnetic interrogation field, wherein the transponder is provided with at least one antenna coil. The invention also relates to a system comprising an ear stud and a fastening element.

Such an ear stud is known per se from WO 99/45760.

Although such an ear stud functions well as it is, it is considered an advantage when the ear stud could be of lighter design. In the past, this has been tried with a thinner design of the walls of the housing. However, this has as a drawback that the housing becomes less robust. The invention contemplates providing an alternative ear stud which can be of lighter design without the housing becoming less robust.

Accordingly, the ear stud according to the invention as defined in claim 1 is characterized in that the antenna coil is manufactured from at least one wire which comprises at least one aluminum core. As the antenna coil is manufactured from a wire comprising an aluminum core the antenna coil and hence the ear stud is lighter than when the wire were to be designed in solid copper with the same thickness. Presently, it is possible to give the ear stud a weight which is for instance less than 3.5 g.

The wire is further provided with a layer of copper extending around the core.

As a layer of copper extends around the core, the antenna wire can still be easily soldered to an electronic circuit of the transponder and a better conductivity is obtained than if the wire were designed in solid aluminum alone.

Even if the wire of the antenna coil were to have a volume which is approximately 50% greater than a wire of solid copper, this could still result in the weight of the antenna coil manufactured from the wire with the aluminum core and the layer of copper extending around the core being approximately 50% less than the weight of the antenna coil if this were manufactured from the wire of solid copper.

Preferably, it holds that the layer of copper is applied directly to the core. It further holds in particular that the layer of copper forms an outer layer of the wire. According to a practical embodiment it holds that the size of a surface of a cross section of the wir perpendicular to a longitudinal direction of the wire with the surface comprising the core and the layer of copper, consists of copper for approximately 3 - 20%, but preferably for approximately 7 - 15% and preferably for approximately 10%. It also holds according to a practical embodiment that the wire has a density of approximately 2 - 4,2 kg/dm³, more preferably a density of approximately 2,8 - 3,6 kg/dm³ and preferably a density of approximately 3,2 kg/dm³.

It is also possible, but not according to the invention, not to provide the aluminum core with a layer of copper extending around the aluminum core. In that case, the aluminum core can be connected to the electronic circuit by means of, for instance, thermo-compression techniques. Even if, in that case, the wire of the coil were designed such that it had a similar resistance as a wire of solid copper, the coil with this wire would be lighter than if the coil were manufactured from the solid copper wire.

In particular it further holds that the wire is further provided with an outer insulating layer.

The antenna coil can be produced as a bobbin wound coil or as a molded coil.

In particular it holds that the antenna coil has the form of a ring.

It further holds in particular that the housing is composed of at least a first housing part and a second housing part which are fastened to each other through welding or gluing.

As the first and second housing part are fastened to each other through, for instance, welding or gluing, it is not required, during manufacture, to provide for instance only the electronic circuit in the first housing part while thereupon the second housing part is applied through injection molding while in the center of the housing no hollow spaces are formed. Presently, hollow spaces can indeed be obtained in that, in advance, the first and second housing part have a shape such that when the first and second housing part are composed to form the housing of the ear stud and both parts are brought together through welding or gluing, such hollow spaces are formed. As a result of the hollow space, a further saving of weight can be realized.

The invention will presently be further elucidated on the basis of the drawing. In the drawing:
Fig. 1 shows a top plan view of a possible embodiment of an ear stud according to the invention;
Fig. 2 shows a side view of the ear stud of Fig. 1 in the direction of the arrow P according to Fig. 1;
Fig. 3 shows a cross-section of the ear stud according to Fig. 1; and
Fig. 4 shows a cross-section of a wire of the coil according to Fig. 1 in a direction perpendicular to a longitudinal direction of the wire.

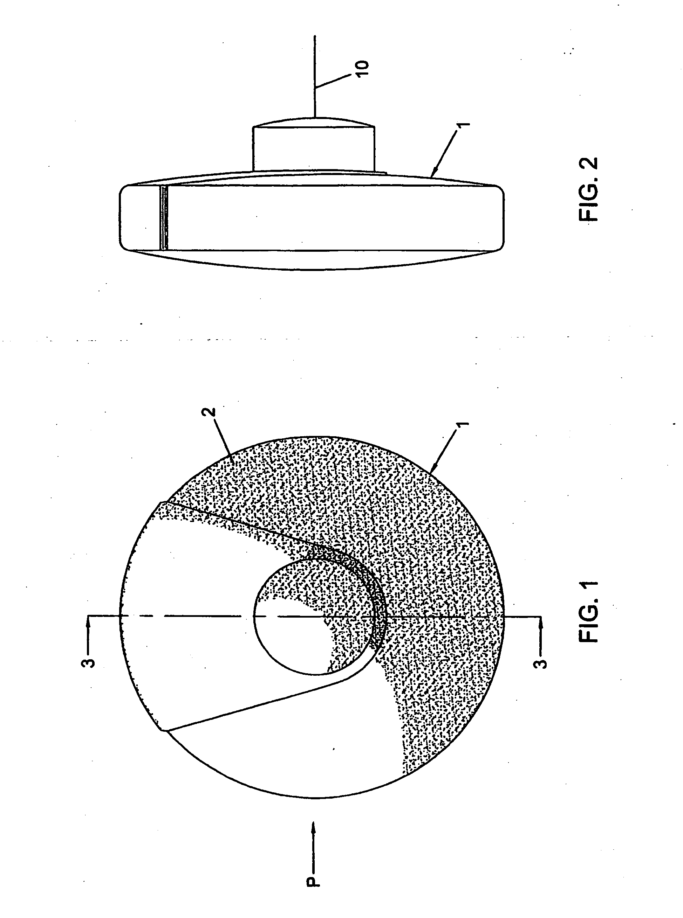

In Figs. 1- 3, reference numeral 1 indicates a possible embodiment of an ear stud according to the invention. The ear stud 1 for identifying an animal is provided with a housing 2. In the housing, a transponder 4 is provided designed for transmitting an identification code upon introduction of the ear stud into an electromagnetic interrogation field. The transponder 4 is provided with at least one antenna coil 6 which is electrically connected to an electronic circuit 8 of the transponder.

The electronic circuit is an electronic circuit known per se. In this example, the transponder is designed as a passive transponder which may be provided with a capacitance which, together with the antenna coil 6, forms a resonant circuit which resonant circuit is connected to an integrated circuit which may be provided with a microprocessor in which the identification code mentioned is stored. Here, the capacitance and the integrated circuit form part of the electronic circuit.

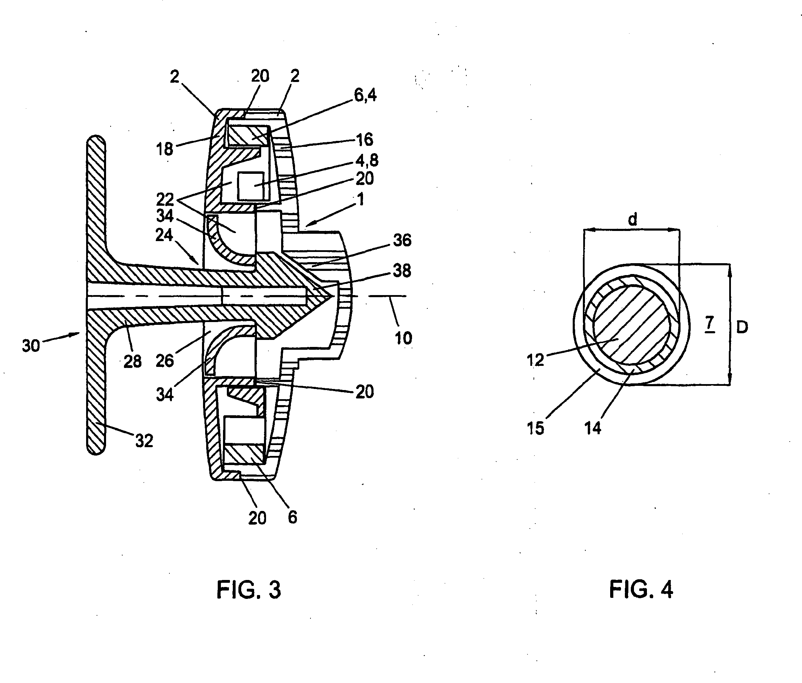

In this example, the antenna coil 6 is of annular design and comprises windings formed by a wire 7 which extend around an axial axis 10 of the ear stud. The wire 7 comprises an aluminum core and a copper layer extending around the core (see Fig. 4). The core is further provided with an outer insulating layer which may be manufactured from a known synthetic suitable to this end, such as a plastic.

In Fig. 4 is shown a cross section perpendicular to a longitudinal direction of the wire. Here, the aluminum core is indicated with reference numeral 12, the layer of copper is indicated with reference numeral 14 and the insulating layer is indicated with reference numeral 15. As appears from Fig 4, the layer of copper is applied directly to the core. Preferably, it holds that the size of a surface of a cross section of the wire 7 perpendicular to a longitudinal direction of the wire, with the surface comprising the core and the copper layer, consists, for approximately 5 - 20 %, more preferably approximately 7 - 15% and preferably approximately 10%, of copper. In Fig. 4, this surface is formed by a disc-shaped surface with diameter d. It also preferably holds that the wire has a density of approximately 2 - 4,2 kg/dm³, more preferably a density of approximately 2,8 - 3,6 kg/dm³ and preferably a density of approximately 3,2 kg/dm³. As, in this example, the layer 14 of the wire 7 is formed by the layer of copper 14, the wire can simply be electronically connected to the electronic circuit by a soldered connection between the layer of copper and the electronic circuit. In this example therefore, this is designed accordingly.

In the example, the wire can for instance have a diameter D of approximately 50 -160 µm. However, other values are also conceivable. The antenna coil can be produced as a bobbin wound coil or as a molded coil. This example involves a molded coil. Such a coil is first wound around a mold and then heated so that the insulating layers of a winding fuse together to a certain extent and, upon cooling, are connected to each other. Then, the mold can be removed and the coil can be provided in the housing of the ear stud. The antenna coil can also be injected all around in a manner known per se.

In this example, it further holds that the housing 2 is composed of at least a first housing part 16 and a second housing part 18. The housing parts 16, 18 are each of dish-shaped design. The first housing part and the second housing part are attached to each other at positions 20 through, for instance, welding or gluing. The housing parts 16, 18 are designed such that in the housing, hollow cavities 22 are formed. In this manner weight is saved too.

The housing is further provided with an opening 24 which terminates in a channel 26 which extends in the axial direction 10. In use, in this channel a pin 28 of a fastening element 30 extends. The fastening element 30 is further provided with a disc-shaped part 32. At least a part of the channel is bounded by resilient elements 34. In this example, these resilient elements 34 are designed as resilient fingers arranged around the channel distributed in tangential direction of the channel, spaced apart from each other in tangential direction.

In this example, these fingers form an integral part with the second housing part 18.

Viewed from the opening 24, beyond the resilient elements 34, the channel 26 comprises a receiving space 36 for receiving a thickened portion 38 of the pin 28, present near an end of the pin. In Fig. 3 it can be seen how, in use, the pin is received in the channel. In this example, all this is dimensioned such that introduction of the pin from an outside of the housing 2 via the opening 24 into the channel 26 results in the resilient elements being bent by the pin 28, in particular by the thickened portion 38, in a direction away from the pin so that a cross section of the channel at the location of the resilient elements increases. When the pin is inserted further, the resilient elements snap towards each other behind the thickened portion when the thickened portion 38 ends up in the receiving space 36. A system provided with an ear stud and such a pin has as an advantage that in a relatively simple manner, with limited force, the ear stud can be fastened to an animal with the aid of the fastening element 30.

The invention is not limited in any manner to the embodiment outlined hereinabove. The aluminum core can for instance, but not according to the invention, not be provided with a layer of copper extending around the aluminum core. In that case, the aluminum core can for instance be connected to the electronic circuit with the aid of thermo-compression techniques. Further, in that case, the outer insulating layer can be applied directly to the aluminum core.

Also, the insulating layer may not be present, however, in that case the windings must be wound such that they are not in contact with each other, to prevent short-circuiting.

Further, instead of with one antenna coil, the transponder can be provided with a plurality of antenna coils. Here at least one of these antenna coils is provided with a wire with an aluminum core 12 and a copper layer 14 provided therearound. In this example, the transponder is designed as a passive transponder. However, it is also conceivable that it is designed as an active transponder and is therefore provided with a battery or accumulator. It is also conceivable that the transponder forms part of an absorption system or a transmission system. Such variants are each understood to fall within the framework of the invention.

## Claims

1. An ear stud (1) for identifying an animal, provided with a housing (2) and a transponder (4) included in included in the housing which is designed for transmitting an identification code upon introduction of the ear stud into an electromagnetic interrogation field, wherein the transponder is provided with at least one antenna coil (6), **characterized in that** the antenna coil is manufactured from at least one wire (7) comprising at least one aluminum core (12) and that the wire is further provided with a layer of copper (14) extending around the core.

2. An ear stud according to claim 1, **characterized in that** the layer of copper is applied directly to the core.

3. An ear stud according to claim 1 or 2, **characterized in that** the size of a surface of a cross section of the wire perpendicularly to a longitudinal direction of the wire, with the surface comprising the core and the layer of copper, consists of copper for approximately 5-20%, more preferably for 7 - 15% and preferably for approximately 10%.

4. An ear stud according to any one of the preceding claims,
**characterized in that** the wire has a density of approximately 2 - 4.2. kg/dm³, more preferably a density of approximately 2:8 - 3,6 kg/dm³ and preferably a density of approximately 3.2 kg/dm³.

5. An ear stud according to any one of the preceding claims,
**characterized in that** the antenna coil has the shape of a ring.

6. An ear stud according to any one of the preceding claims,
**characterized in that** the transponder is provided with an electronic circuit (8) while the antenna coil is connected to the electronic circuit.

7. An ear stud according to any one of the preceding claims 1- 4 and according to claim 6, **characterized in that** the antenna coil is electrically connected to the electronic circuit through a soldered connection between the layer of copper and the electronic circuit.

8. An ear stud according to any one of the preceding claims,
**characterized in that** the housing is at least composed of a first housing part (16) and a second housing part (18) which are attached to each other through welding or gluing.

9. An ear stud according to claim 8, **characterized in that** the housing parts are each designed in the form of a dish.

10. An ear stud according to any one of the preceding claims,
**characterized in that** the housing is provided with an opening (24) which terminates in a channel (26) for receiving a pin (28) of a fastening element (30), wherein at least a part of the channel is bounded by resilient elements (34) so that through the introduction of the pin into the channel the resilient elements are bent by the pin in a direction away from the pin so that a cross section of the channel at the location of the resilient elements increases.

11. An ear stud according to claim 10, **characterized in that** the resilient elements are designed as resilient fingers which are arranged around the channel (26) distributed in tangential direction of the channel and are spaced apart from each other in tangential direction.

12. An ear stud according to claim 10 or 11, **characterized in that** viewed from the opening, beyond the resilient elements, the channel is provided with a receiving space (36) for receiving a thickened portion (38) of the pin which is present near an end of the pin.

13. An ear stud according to any one of the preceding claims,
**characterized in that** the wire is further provided with an outer insulating layer (15).

14. A system provided with an ear stud according to claim 12 and a fastening element (30) provided with a disc-shaped part (32) and a pin (28) provided near its end with a thickened portion (38) wherein, in use, the pin extends in the channel (26) and the thickened portion is in the receiving space (36).

## Patentansprüche

1. Ohrstecker (1) zum Identifizieren eines Tiers, mit einem Gehäuse (2) und einem in dem Gehäuse enthaltenen Transponder (4), der zum Senden eines Identifikationscodes bei Einführung des Ohrsteckers in ein elektromagnetisches Abfragefeld ausgebildet ist, wobei der Transponder mit mindestens einer Antennenspule (6) versehen ist,
**dadurch gekennzeichnet, dass** die Antennenspule aus mindestens einem Draht (7) gebildet ist, der mindestens einen Aluminiumkern (12) aufweist, und dass der Draht ferner mit einer Schicht aus Kupfer (14) versehen ist, die um den Kern verläuft.

2. Ohrstecker nach Anspruch 1, **dadurch gekennzeichnet, dass** die Kupferschicht direkt auf den Kern aufgetragen ist.

3. Ohrstecker nach Anspruch 1 oder 2, **dadurch gekennzeichnet, dass** die Größe einer Querschnittsfläche des Drahts, die rechtwinklig zur Längsrichtung des Drahts verläuft, wobei die Fläche den Kern und die Kupferschicht umfasst, zu ungefähr 5-20%, vorzugsweise 7-15% und besonders bevorzugt zu ungefähr 10% aus Kupfer besteht.

4. Ohrstecker nach einem der vorhergehende Ansprüche, **dadurch gekennzeichnet, dass** der Draht eine Dichte von ungefähr 2 - 4,2 kg/dm³, vorzugsweise eine Dichte von ungefähr 2,8 - 3,6 kg/dm³, und besonders bevorzugt eine Dichte von ungefähr 3,2 kg/dm³ hat.

5. Ohrstecker nach einem der vorhergehende Ansprüche, **dadurch gekennzeichnet, dass** die Antenne die Form eines Rings hat.

6. Ohrstecker nach einem der vorhergehende Ansprüche, **dadurch gekennzeichnet, dass** der Transponder mit einer elektronischen Schaltung (8) versehen ist, wobei die Antennenspule mit der elektronischen Schaltung verbunden ist.

7. Ohrstecker nach einem der vorhergehende Ansprüche 1 - 4 und nach Anspruch 6, **dadurch gekennzeichnet, dass** die Antennenspule mittels einer Lötverbindung zwischen der Kupferschicht und der elektronischen Schaltung elektrisch mit der elektronischen Schaltung verbunden ist.

8. Ohrstecker nach einem der vorhergehende Ansprüche, **dadurch gekennzeichnet, dass** das Gehäuse aus mindestens einem ersten Gehäuseteil (16) und einem zweiten Gehäuseteil (18) besteht, die durch Schweißen oder Kleben aneinander befestigt sind.

9. Ohrstecker nach Anspruch 8, **dadurch gekennzeichnet, dass** die Gehäuseteile jeweils tellerförmig ausgebildet sind.

10. Ohrstecker nach einem der vorhergehende Ansprüche, **dadurch gekennzeichnet, dass** das Gehäuse mit einer Öffnung (24) versehen ist, die in einem Kanal (26) zur Aufnahme eines Stifts (28) eines Befestigungselements (30) endet, wobei mindestens ein Teil des Kanals durch elastische Elemente (34) begrenzt ist, so dass durch die Einführung des Stifts in den Kanal die elastischen Elemente von dem Stift in einer von dem Stift weg verlaufenden Richtung gebogen werden, so dass der Querschnitt des Kanals an der Stelle der elastischen Elemente zunimmt.

11. Ohrstecker nach Anspruch 10, **dadurch gekennzeichnet, dass** die elastischen Elemente als elastische Finger ausgebildet sind, die um den Kanal (26) herum in Tangentialrichtung des Kanals verteilt angeordnet sind und in Tangentialrichtung voneinander beabstandet sind.

12. Ohrstecker nach Anspruch 10 oder 11, **dadurch gekennzeichnet, dass**, von der Öffnung her betrachtet, der Kanal hinter den elastischen Elementen mit einem Aufnahmeraum (36) zur Aufnahme eines nahe dem Ende des Stifts angeordneten verdickten Teils (38) des Stifts versehen ist.

13. Ohrstecker nach einem der vorhergehende Ansprüche, **dadurch gekennzeichnet, dass** der Draht ferner mit einer äußeren Isolierschicht (15) versehen ist.

14. System mit einem Ohrstecker nach Anspruch 12 und einem Befestigungselement (30), das einen scheibenförmigen Teil (32) und einen Stift (28) aufweist, der nahe seinem Ende mit einem verdickten Teil (38) versehen ist, wobei bei Betrieb der Stift in den Kanal (26) ragt und der verdickte Teil in dem Aufnahmeraum (36) angeordnet ist.

## Revendications

1. Boucle d'oreille (1) pour identifier un animal, munie d'un boîtier (2) et d'un transpondeur (4) logé dans le boîtier qui est conçu pour transmettre un code d'identification lors de l'introduction de la boucle d'oreille dans un champ d'interrogation électromagnétique, le transpondeur étant pourvu d'au moins une bobine d'antenne (6), **caractérisée en ce que** la bobine d'antenne est fabriquée à partir d'au moins un fil métallique (7) comprenant au moins une âme en aluminium (12) et **en ce que** le fil métallique est en outre muni d'une couche de cuivre (14) s'étendant autour de l'âme.

2. Boucle d'oreille selon la revendication 1, **caractérisée en ce que** la couche de cuivre est appliquée directement à l'âme.

3. Boucle d'oreille selon la revendication 1 ou 2, **caractérisée en ce que** la taille d'une surface d'une section transversale du fil métallique perpendiculairement à une direction longitudinale du fil, ladite surface comprenant l'âme et la couche de cuivre, est constituée de cuivre pour environ 5 à 20 %, de préférence encore de 7 à 15 % et de préférence pour environ 10 %.

4. Boucle d'oreille selon l'une quelconque des revendications précédentes, **caractérisée en ce que** le fil métallique a une masse volumique d'environ 2 à 4,2 kg/dm³, de préférence encore une masse volumique d'environ 2,8 à 3,6 kg/dm³, et de préférence une masse volumique d'environ 3,2 kg/dm³.

5. Boucle d'oreille selon l'une quelconque des revendications précédentes, **caractérisée en ce que** la bobine d'antenne a la forme d'un anneau.

6. Boucle d'oreille selon l'une quelconque des revendications précédentes, **caractérisée en ce que** le transpondeur est pourvu d'un circuit électronique (8), la bobine d'antenne étant connectée audit circuit électronique.

7. Boucle d'oreille selon l'une quelconque des précédentes revendications 1 à 4 et selon la revendication 6, **caractérisée en ce que** la bobine d'antenne est connectée électriquement au circuit électronique par l'intermédiaire d'une connexion soudée entre la couche de cuivre et le circuit électronique.

8. Boucle d'oreille selon l'une quelconque des revendications précédentes, **caractérisée en ce que** le boîtier est au moins composé d'une première pièce de boîtier (16) et d'une deuxième pièce de boîtier (18) qui sont fixées l'une à l'autre par soudage ou par collage.

9. Boucle d'oreille selon la revendication 8, **caractérisée en ce que** les pièces de boîtier ont toutes deux la forme d'une capsule.

10. Boucle d'oreille selon l'une quelconque des revendications précédentes, **caractérisée en ce que** le boîtier est muni d'une ouverture (24) qui se termine dans un canal (26) destiné à recevoir une tige (28) d'un élément de fixation (30), dans laquelle au moins une partie du canal est délimitée par des éléments résilients (34) de telle manière que lors de l'introduction de la tige dans le canal, les éléments résilients sont déformés par la tige dans une direction s'éloignant de la tige, de sorte que la section du canal augmente à l'endroit où se trouvent les éléments résilients.

11. Boucle d'oreille selon la revendication 10, **caractérisée en ce que** les éléments résilients se présentent sous la forme de doigts résilients qui sont agencés autour du canal (26), répartis dans une direction tangentielle du canal, et qui sont espacés les uns des autres dans la direction tangentielle.

12. Boucle d'oreille selon la revendication 10 ou 11, **caractérisée en ce que**, vu depuis l'ouverture, au-delà des éléments résilients, le canal est pourvu d'un espace récepteur (36) destiné à recevoir une partie renforcée (38) de la tige qui est présente près d'une extrémité de la tige.

13. Boucle d'oreille selon l'une quelconque des revendications précédentes, **caractérisée en ce que** le fil métallique est en outre muni d'une couche isolante extérieure (15).

14. Système pourvu d'une boucle d'oreille selon la revendication 12 et d'un élément de fixation (30) pourvu d'une pièce en forme de disque (32) et d'une tige (28) munie d'une partie renforcée (38) près de son extrémité, dans lequel, en utilisation, la tige s'étend dans le canal (26) et la partie renforcée se trouve dans l'espace récepteur (36).
